# EUROPÄISCHE PATENTSCHRIFT

(11) **EP 0 567 845 B1**
(45) Veröffentlichungstag und Bekanntmachung des Hinweises auf die Patenterteilung: **08.07.1998**
(21) Anmeldenummer: 93106037.0
(22) Anmeldetag: 14.04.1993
(51) Int. Cl.: B29C 70/24, B29B 11/16

(54) **Formbares, multiaxiales Verstärkungsgebilde**
Formable multiaxial reinforcement
Renfort multitaxial formable

(30) Priorität: 26.04.1992 DE 4214636
(43) Veröffentlichungstag der Anmeldung: 03.11.1993
(73) Patentinhaber: Institut für Polymerforschung Dresden e.V., 01069 Dresden (DE)
(72) Erfinder: Rothe, Horst, O-8010 Dresden (DE)
(74) Vertreter: Rauschenbach, Marion, Dipl.-Ing.

(56) Entgegenhaltungen:
- EP-A- 0 361 795
- FR-A- 2 124 136
- FR-A- 2 606 704
- GB-A- 2 135 173

## Beschreibung

Die Erfindung bezieht sich auf ein formbares, multiaxiales Verstärkungsgebilde aus mindestens einer flächigen Trägerlage und dieser zugeordneten Verstärkungsfäden zur Armierung von Hochleistungsverbunden für die Herstellung geometrisch komplizierter Formteile mit zumindest bereichsweise entsprechend den im Formteil auftretenden Spannungen kraftlinienorientierten Legungen der Verstärkungsfäden.

Es sind kontinuierlich hergestellte, multiaxiale Verstärkungsartikel bekannt, bei denen mehrere übereinander angeordnete Scharen von parallel liegenden Verstärkungsfäden längs, quer und schräg verlaufen, und die über die gesamte Warenbahn wirkartig miteinander vernäht sind (EP 0 361 795 A2). Solche multiaxialen Verstärkungsartikel können beispielsweise mittels der Multi-Axial-Kettenwirkmaschine mit 7 Schußeintragsystemen, Typ Copcentra, der Firma LIBA/Deutschland, hergestellt werden. Mit derartigen Verstärkungsartikeln zielt man darauf ab, Verbundwerkstoffe mit weitgehend isotropen Strukturen herzustellen.

Der Begriff multiaxial weist darauf hin, daß die Verstärkungsfasern in vielen Richtungen angeordnet sind. Konstruktiv bedingt liegen jedoch Beschränkungen bezüglich Anzahl und Richtung vor. LIBA gibt neben der Längsrichtung (0 Grad) einen Bereich von -/+ (30 bis 90) Grad an, wobei die Verstärkungsfasern innerhalb der Fadenscharen jeweils parallel angeordnet sind. Eine Weiterentwicklung dieser Technologie sieht zusätzliche Kettfadenscharen bestimmter Breite vor, die in geometrischen Figuren in Warenrichtung fortschreitend geführt werden können, nur in begrenztem Maße angepaßt an Spannungsverläufe des zu fertigenden Formteils.

Ein derartiges Verstärkungsgebilde ist aus dem Aufsatz 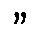 Beanspruchungs- und konfektionsgerechte Textilkonstruktionen für Hochleistungsverbunde" (Melliand Textilberichte 5/1991, Seiten 330 bis 333) von Offermann und Franzke, TU Dresden, bekannt. Bei dem sogenannten 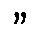 kettfadenorientierten Malimoprodukt" handelt es sich um eine Trägerlage in Form von endlos gewirkter Bahnenware mit mehreren multiaxialen Kettfadenscharen als Verstärkungsfäden. Die Kett- und Schußgelege werden mittels einer Kombination aus Näh- und Wirktechnik verbunden. In einer speziellen Nähwirkmaschine mit einem vorgegebenen Kettfadenveränderungssystem werden beim fortlaufenden Wirken der Bahnenware, bei dem auch andere Trägermaterialien miteingewirkt werden können, zusätzliche Kettfadenscharen in bestimmten Breiten und geometrischen Figuren, die an einzelnen Spannungsverläufen im herzustellenden Formteil orientiert sein können, eingearbeitet. Die Kettfadenscharen werden dazu durch elastisch miteinander verbundene, nadelöhrähnliche Fadenführblöcke geleitet, die auf zwei Versatzlinien zueinander angeordnet sind. Die zusätzlichen Kettfadenscharen, die nicht der Herstellung der Bahnenware dienen, werden fortlaufend mitgeführt. Es werden alle Kettfäden stetig vorwärtslaufend verarbeitet und nach Beendigung einer Konturlinie wieder in ihre Anfangslage für den Beginn einer neuen Konturlinie rückgeführt. Die einzelnen Verstärkungsgebilde werden in einem nachgeordneten Arbeitsschritt aus der endlosen Bahnenware entsprechend dem zusätzlichen Kettfadenverlauf herausgetrennt.

Bekannt ist die 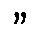 Malimostruktur" auch aus dem Aufsatz 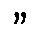 Einfluß und Ausnutzung der Eigenschaften der Flächengebilde auf Bauteileigenschaften" (Chemiefasern/Textilindustrie (Industrie-Textilien), 41./93. Jahrgang, Mai 1991, Seiten T 141 bis 147) von H. Planck, Institut für Textil- und Verfahrenstechnik, Denkendorf. Planck weist in seinem Aufsatz darauf hin, daß es bei der 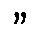 Malimotechnik" maschinentechnisch nicht möglich ist, die Schußfäden so exakt einzubringen, daß sie im rechten Winkel zu den Kettfäden verlaufen. Weiterhin befaßt sich Planck noch kritisch mit einigen anderen Eigenschaften des Produkts.
Thema des genannten Aufsatzes ist eine Übersicht über die im Stand der Technik bekannten textilen Strukturen bei Faserverbundwerkstoffen. Strukturformen, wie beispielsweise Vliesstoffe, Gelege, Gewebe, Gestricke und Gewirke, werden in ihren charakteristischen Eigenheiten beschrieben. Besonders hingewiesen sei an dieser Stelle noch auf die Strukturform des Flechtens, bei der komplizierte, üblicherweise rotationssymmetrische Formteile durch formgetreue Anpassung der Legung der Verstärkungsfäden in ihrer Festigkeit erheblich verbessert werden können. Abgesehen von konfektionierter Schlauchware ist hierzu aber ein Umflechten des Bauteils selbst erforderlich. Die Fadenführung ist dabei bei Verwendung einer speziellen Klöppeltechnik relativ frei.
Der Autor nimmt Bezug auf die Anforderungen an die Verstärkungsstruktur durch das herzustellende Formteil und dessen Beanspruchungen. Generelle Probleme, wie beispielsweise starke Fadenumlenkungen, unidirektionale Ausrichtungen, Bindungseinflüsse, Kraftaufnahmen und -weiterleitungen, Beeinträchtigungen der einzelnen Verstärkungsfasern, Fixierungsprobleme und Drapierbarkeit der jeweiligen Verstärkungsgebilde werden angesprochen. Der genannte Artikel bietet daher einen umfassenden Überblick über den technologischen Hintergrund der Erfindung. Er zeigt auf, wieviele Fachleute sich bereits mit den verschiedensten Lösungsansätzen für Anforderungen an Verstärkungsgebilde befaßt haben.

Wie bedeutend die Verbundwerkstofftechnologien sind, ist auch an der Bandbreite ihrer unterschiedlichsten Einsatzmöglichkeiten zu erkennen. Sie finden sowohl bei Spitzentechnologien in der Luft- und Raumfahrttechnik ( 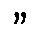 Faserkeramiken - Werkstoffe für thermomechanisch hochbeanspruchte Strukturen", Krenkel, Schanz, DLR-Nachrichten Heft 65; 11/91, Seiten 40 bis 45) oder beim Automobilbau ( 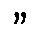 Endlosfaserverstärkte Thermoplaste", Krauss, DLR-Nachrichten Heft 65; 11/91, Seiten 36 bis 39; 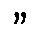 Formbare und verdichtungsfähige Fasermatte zum Herstellen von Formteilen durch Anwenden von Druck und Temperatur" gemäß DE-OS 38 25 987 A1) als auch beim Untertagebergbau ( 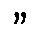 Textilverbundmatte" gemäß DE-OS 38 34 701 A1) großen Eingang. Dem Aufsatz von Krauss ist auch zu entnehmen, daß beim Spritzgießverfahren durch das Einlegen endlosfaserverstärkter Thermoplastteile, bei denen der Faserverlauf parallel zur Belastungsrichtung im späteren Bauteil orientiert ist, in kurzfaserverstärkte Thermoplaste höherbelastbare Bauteile hergestellt werden können. Bei den Einlagen handelt es sich aber um geometrisch einfache Formteile.

Deutlich erkennbar werden bei der Beschreibung der unterschiedlichsten Einsatzmöglichkeiten von Verbundwerkstoffen auch die hohen Anforderungen an deren absolute Zuverlässigkeit. Die eingesetzten Verbundwerkstoffe sollten optimal in ihrem Materialeinsatz und in ihrer Materialmenge ausgelegt sein. Sie sollten bei jeder Einsatzvariante die optimale Anpassung ihrer Formbarkeit und Verstärkungsstruktur an das herzustellende Formteil mit seinen geometrischen und kräftemäßigen Erfordernissen aufweisen. Ihre Versagenswahrscheinlichkeit muß minimiert sein. Darüber hinaus müssen sie in ihrer Herstellung eindeutig reproduzierbar und wirtschaftlich vertretbar sein.

Diesen komplexen Anforderungen kann das Verstärkungsgebilde nach der Erfindung dadurch gerecht werden, daß die Trägerlage in ihren Abmessungen der Flächenabwicklung des herzustellenden Formteils entspricht, die Verstärkungsfäden in ihrer Dimensionierung und Legung den Anforderungen entsprechend frei ausgewählt sind und die Trägerlage und die Verstärkungsfäden durch Sticken mittels Stickfäden einander zugeordnete sind.

Bei dem erfindungsgemäßen Verstärkungsgebilde ist die einzelne Trägerlage durch ihre kompakten Abmessungen beim Aufbringen der Verstärkungsfäden gut handhabbar. Die Randbereiche der Trägerlage sind dazu mit einer ausreichenden Randzugabe versehen, über die die Trägerlage in einen entsprechend ausgewählten Stickrahmen zum Besticken eingespannt wird. Das einzusetzende Material ist in Verbrauch und Leistungsgewicht minimiert. Allgemein kann die Trägerlage auch als Stickgrund bezeichnet werden. Nach der Fertigstellung wird die Randzone entfernt. Sowohl bei Einzelfertigung als auch bei Serienfertigung in einem mehrere Trägerlagen gleichzeitig umfassenden Stickrahmen können die einzelnen Trägerlagenumrisse optimal auf einer Grundware angeordnet werden, so daß diese ohne großen Verschnitt verarbeitet werden kann. Gerade bei teuren Grundwaren ist dies von Bedeutung. Eine feste Richtungsorientierung der Trägerlage unter der Maßgabe einer fortlaufenden Verarbeitung wie beispielsweise beim Nähwirken ist nicht gegeben. Die Trägerlage ist über den Stickrahmen frei bewegbar. Alle Arten von Trägerlagen lassen sich verarbeiten. Eine Bindung an ein stets vorhandenes, fortlaufendes Grundmaterial ist nicht erforderlich. Die Trägerlagen bei der Erfindung dienen in der Hauptsache der Fixierung der Verstärkungsfäden. Sie können daher beständig in den Verbund miteingehen oder sich in diesem auflösen, wenn die Fixierung der Verstärkungsfäden vom Verbundmaterial selbst übernommen worden ist. Gleiches ist denkbar, wenn sich die Verstärkungsfäden gegenseitig ausreichend fixieren, so daß die Trägerlage im Nachhinein entfallen kann. Teure Grundwaren werden so vermieden. Durch ihre dem Formteil entsprechenden Abmessungen kann die fertiggestellte Trägerlage paßgenau in die Formteilvorlage ein- oder angelegt werden. Dadurch ist eine genaue Positionierung der aufgebrachten Verstärkungsfäden im herzustellenden Formteil - besonders an Stellen sphärischer Erhebungen - sicher gewährleistet. Der Umstand, daß sich aus der Raumform ergebende Flächenüberdeckungen in der Ebene nicht berücksichtigt werden können, schadet dabei nicht.

Die Verstärkungsfäden des erfindungsgemäßen Verstärkungsgebildes sind durch die freie Auswählbarkeit von Dimensionierung und Legung optimal und vollständig allen konstruktiven und kräftemäßigen Formteilerfordernissen beanspruchungsgerecht anpaßbar. An Stellen großer Krafteinleitungen oder Verschleißgefahren für das Formteil werden extrem starke Verstärkungsfäden zum Einsatz kommen. An Stellen schwächerer Belastungen kann die Dimensionierung entsprechend geringer gewählt werden. Gleiches gilt für die Legung der Verstärkungsfäden. Sie kann beliebig eng oder weit erfolgen, sie kann jeder Kraftlinie folgen. Eine vollständige Multiaxialität ist gegeben. Beliebige Bereiche können ausgespart werden, Fadenrückführungen sind vermieden. Überlagerungen und Richtungsumkehrungen sind ausführbar. Damit sind durch Schleifenlegungen auch gleichsam geschlossene Konturen möglich. Fadenenden können außerhalb des Verstärkungsgebildes gelegt werden. Bei der Umformung des zweidimensionalen Verstärkungsgebildes in die dreidimensionale Raumform erforderliche Fadenreserven können bei der Legung beliebig berücksichtigt werden.

Die Zuordnung von Trägerlage und Verstärkungsfäden durch Sticken mittels Stickfäden ermöglicht die optimale Gestaltung des erfindungsgemäßen Verstärkungsgebildes. Das Sticken, das bisher nur für modische Zwecke eingesetzt wurde, erlaubt eine allen Formteilerfordernissen angepaßte Zuordnung durch starken oder schwächeren Bindungskraftschluß zwischen Trägerlage und Verstärkungsfäden an jeder beliebigen Stelle auf der Trägerlage. Dabei werden die Verstärkungsfäden keinesfalls wie beim Weben stark gewellt, sondern bleiben eben, so daß die bei Hochleistungsverbunden besonders hohen Anforderungen an den Elastizitätsmodul und die Festigkeit des Verstärkungsgebildes in Richtung der Verstärkungsfäden vollständig erfüllt werden. Ein Verzug des Verstärkungsgebildes wie beim Nähwirken durch Winkelabweichungen tritt ebenfalls nicht auf. Da die Verstärkungsfäden nicht durch Nadelöhre geführt werden, hat ihre Dimensionierung keinen Einfluß auf ihre Anstickbarkeit. Auch bleiben die Verstärkungsfäden durch das Ansticken gut verform- und verschiebbar, was für die Drapierfähigkeit des Verstärkungsgebildes von Bedeutung ist. Gestickt wird je nach Anordnung der Trägerlagen bzw. des Stickgrundes mit einem oder mehreren Stickköpfen, unter denen ein entsprechender Stickrahmen mittels eines Pantographen in der x-y-Ebene frei verschiebbar angeordnet ist. Die kinematische Umkehr mit beweglichen Stickköpfen und festem Stickrahmen ist ebenfalls möglich. Umlenkungen der Verstärkungsfäden können außerhalb der Trägerlage gelegt werden, so daß diese zusammen mit der Randzone später entfernt werden. Die Fadenenden werden dann vom Verbundmaterial fixiert. Freie Fadenenden können aber auch direkt durch Versticken festgelegt werden.

Andere Zuordnungsmethoden mit einer relativ großen Legungsfreiheit, wie beispielsweise Verkleben oder Verschweißen von Trägerlage und Verstärkungsfäden, weisen nicht die große Anpassungsfähigkeit und die genannten Vorteile des Stickens auf. Zumeist sind sie auch wesentlich komplizierter in ihrer Ausführung. Ferner wird durch die beanspruchungsgerechte Auswahl des Materials für den Stickfaden ein Wegschwimmen der Verstärkungsfäden bei der Formgebung des erfindungsgemäßen Verstärkungsgebildes zuverlässig verhindert.

Das erfindungsgemäße Verstärkungsgebilde ist durch seine große Modifizierungsfähigkeit für nahezu jeden Einsatzfall optimal geeignet. Es kann in jeden Verbund, sei er aus Holz, Metall, Papier, Beton, Glas, Keramik, Kunststoff oder einem anderen Material, unter Ausnutzung seiner Hochleistungs-Beanspruchbarkeit und in jedes Formteil, sei es sphärisch, verwinkelt oder geometrisch kompliziert, vorteilhaft eingebracht werden. Auch ein Einsatz auf architektonischem Gebiet, beispielsweise für Glasverbundwände mit besonderer optischer Gestaltung in Farbe und Form (Legung und Färbung der Verstärkungsfäden) ist denkbar. Besonders geeignet ist das Verstärkungsgebilde bei der Herstellung hochbeanspruchter, komplizierter Kunststoffverbund-Formteile in größeren Herstellungsreihen, wie sie beispielsweise in der Autoindustrie bei tragenden Formteilen mit einem geringen erforderlichen Eigengewicht (z. B. Autositzschalen mit Gurtbefestigungen) auftreten. Dabei kann das erfindungsgemäße Verstärkungsgebilde sowohl bei Laminierverfahren mit schichtweisem Auftragen von flüssigem Kunststoff als auch bei Umformverfahren mit aufschmelzendem Matrixmaterial, das in festem Zustand in das Verstärkungsgebilde integriert worden ist, mit seinem hohen Produktivitätsstandard kostengünstig eingesetzt werden. Auch leistet das erfindungsgemäße Verstärkungsgebilde eine wichtigen Umweltbeitrag durch die besonders einfache, entsprechend bevorzugte Verwendungsmöglichkeit recyclefähiger Materialien, z. B. wiederaufschmelzbarer Thermoplaste.

Wichtig ist ferner die Einfügbarkeit der Bestimmung und Herstellung des Verstärkungsgebildes in moderne, computergesteuerte Verfahrensabläufe. Beispielsweise können mittels computerunterstützter Designprogramme Flächenabwicklungen der herzustellenden Formteile mit genau berechneten Spannungsverläufen und anderen Beanspruchungen sowie erforderlichen Fadenreserven ermittelt werden. Mit derartigen Programmen kann durch entsprechende Erweiterungen und Zwischenschritte auch die Steuerung (Punchen) der Verlegung der entsprechend den ermittelten Beanspruchungen ausgewählten Verstärkungsfäden in Art und Ort auf der Trägerlage und die Führung der in den Stickrahmen eingespannten Trägerlage durch den Pantographen unter einem oder mehreren Stickköpfen (oder kinematisch umgekehrt) durchgeführt werden. Dabei werden Stickerfordernisse, wie beispielsweise Fadenumkehr außerhalb des Stickbildes, Stickarten, Stichweiteneinstellung und Stickfadenwechsel, entsprechend berücksichtigt. Für Einzelfälle, beispielsweise für optische Gestaltungen, kann das Sticken auch von Hand gesteuert und unter Umständen auch durchgeführt werden.

Anhand der folgenden Erläuterungen zu einigen Ausführungsformen des erfindungsgemäßen Verstärkungsgebildes gemäß den formulierten Unteransprüchen sollen dessen optimale Anpassungsfähigkeit an die Formteilerfordernisse und hoher Produktivitätsstand noch verdeutlicht werden. Besonders bevorzugt wird dabei der Einsatz des erfindungsgemäßen Verstärkungsgebildes in Kunststoff-Hochleistungsverbunden.

Entsprechend einer ersten Ausführungsform der Erfindung besteht die Trägerlage aus einem textilen Glaswerkstoff. Es kann sich hierbei beispielsweise um ein Textil-Glasgewebe oder -vlies oder um eine Glasmatte handeln. Wird eine solche Trägerlage in einen Verbund aus duroplastischen Kunststoffen, die irreversibel aushärtbar sind, eingebracht, trägt dadurch auch die Trägerlage zur Erhöhung der Verbundfestigkeit bei. Handelt es sich bei dem Verbund um einen solchen aus thermoplastischen Kunststoffen, kann die Trägerlage erfindungsgemäß vorteilhaft ebenfalls aus einem folienartigen Kunststoff, insbesondere in Form einer Kunststoffolie oder eines Kunststoffvlieses, bestehen. die Stickfäden fixieren dann die Verstärkungsfäden auf der Trägerlage, die nach ihrer Einbringung in den Verbund beim Formprozeß mit dem Verbundmaterial verschmilzt und als Matrixmaterial zur Wirkung kommt. Die Verstärkungsfäden aber bleiben richtig positioniert. Es können mehrere Trägerlagen übereinander angeordnet werden. Dabei können alle oder auch nur eine Lage die Verstärkungsfäden fixieren. Das Verbundmaterial ist recyclefähig. Allgemein können auch mehrere Trägerlagen gleicher oder unterschiedlicher Materialien entsprechend den Anforderungen in den Verbund eingebracht werden. Dabei können je nach Herstellungsverfahren die Verstärkungsfäden durch die Stickfäden nur an der obersten Lage oder auch an allen Lagen fixiert sein.

Die Verstärkungsfäden bleiben im Verbundmaterial in Art und Lage dauerhaft erhalten. Ein Verschmelzen der Verstärkungsfäden mit dem Verbundmaterial ist unerwünscht. Sie dienen in der Hauptsache (abgesehen von optischen Aspekten) der gezielten Kraftaufnahme und -weiterleitung im hergestellten Formteil. Gemäß einer weiteren vorteilhaften Erfindungs-Ausgestaltung bestehen sie aus einem Filamentgarn, insbesondere aus Glas-, Aramid- oder Kohlenstoff-Filamentgarn. Diese Endlos-Garne sind hochfest und beliebig dimensionierbar. Sie sind trotz einer gewissen Sprödigkeit einsetzbar, da sie keinen extremen Umlenkungen unterworfen werden. Zur Verbundbildung selbst tragen sie nicht bei.
Dies ist jedoch der Fall, wenn die Verstärkungsfäden erfindungsgemäß aus einem Hybridgarn bestehen, das aus Verstärkungsfilamenten, beispielsweise Glas-, Aramid- oder Kohlenstoff-Filamentgarn, und verbundbildenden Filamenten besteht. Solche Hybridgarne sind aus dem Aufsatz 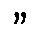 Hybridgarne aus HT-Thermoplasten/Carbonfasern: neues Halbzeug für Hochleistungsverbunde" (Chemiefasern/Textilindustrie (Industrie-Textilien), 39./91. Jahrgang, 12/1989, Seiten T 224-228) von Vogelsang et al., Ludwigshafen bekannt. Bei Hybridgarnen handelt es sich um Filament-Mischgarne aus einer Verstärkungsfaser und einem vorzugsweise thermoplastischen Polymerfilamentgarn, das die Matrixkomponente darstellt. Sie ist das Einbettungsharz für das Verstärkungsgebilde (z. B. Polyamid, Polyester, Polypropylen) und wirkt verbundbildend. Die Matrixkomponente ist wesentlich verantwortlich für den Grenzübergang Verbundmaterial/Verstärkungs-faser, dessen Qualität die Kraftübertragungsmöglichkeiten innerhalb des Formteils bestimmt. Auch die relativ starke Sprödigkeit von Hybridgarnen ist kein Einsatzhinderungsgrund, da sie bei dem Verstärkungsgebilde nach der Erfindung nicht wie beim herkömmlichen Wirken starken Umlenkungen unterworfen wird.

Zur Produktivitätssteigerung bei starken Belastungsanforderungen oder auch bei optischen Anwendungen ist es nach einer anderen Ausgestaltung des erfindungsgemäßen Verstärkungsgebildes vorteilhaft, wenn die Verstärkungsfäden als Kordeln ausgebildet sind. Derartige Kordeln oder Schnüre können bis zu einem Durchmesser von ca. 10 mm problemlos aufgestickt werden. Ihre Anwendung erlaubt es, an Stellen großer Krafteinleitung mit eng liegenden Kraftlinien statt einer Reihe von Verstärkungsfäden dicht an dicht nebeneinander legen zu müssen, in einem einzigen Arbeitsgang eine Vielzahl von Verstärkungsfäden gleichzeitig aufbringen zu können. Der Herstellungsprozeß des erfindungsgemäßen Verstärkungsgebildes wird dadurch stark vereinfacht und die Produktivität gesteigert. Das Herstellen der Kordeln entspricht einer Vorfertigung für die Verstärkungsfadenlegung. Kordeln lassen sich auch gut an Stellen hoher Formteilabnutzung (Kantenschutz) einsetzen. Günstig ist es erfindungsgemäß weiterhin, wenn die Kordeln mit mindestens einem Bindfaden zusammengehaltene Filamentgarnstränge sind. Sie weisen damit deren Eigenschaften auf. Die Bindung der Garnstränge zu Kordeln kann je nach Anforderung beispielsweise durch Umwinden, Umflechten oder Umhäkeln erfolgen. Die Bindefäden sind wiederum Filament- oder Hybridgarne aus Glas oder/und Kunststoff.

Die bereits beschriebene freie Variabilität bei der Legung der Verstärkungsfäden (gerade auch bei der Verwendung von Kordeln) wird wesentlich dadurch ermöglicht, daß diese an die Trägerlage angestickt werden. Beim Sticken gibt es verschiedene Verbindungsmöglichkeiten zur Anpassung an die Formteilerfordernisse und die Art der Verstärkungsfäden. Grundsätzlich unterscheidet man zwischen Ein- und Zweifaden-Sticksystemen. Entsprechend einer weiteren Ausgestaltung der Erfindung sind die Verstärkungsfäden zumindest abschnittsweise kontinuierlich an die Trägerlage angestickt. Hierdurch wird eine starke Fixierung der Verstärkungsfäden an die Trägerlage und auch untereinander bewirkt, die beispielsweise an Orten großer Krafteinleitung oder relativ starker Umlenkung benötigt wird. Ein solches kontinuierliches Sticken kann bei einzelnen Verstärkungsfilamenten (ungekordelt) durch zick-zack-artiges Übersticken (zweifädig) des Verstärkungsfadens erfolgen; eine Parallellagerung von Verstärkungs- und Stickfäden ist so vermieden. Bei gekordelten Verstärkungssträngen hingegen kann die Fixierung durch Stepp- (zweifädig) oder Kettelstiche (einfädig) bewirkt werden. Durch Überkreuzung der Binde- bzw. Flechtfäden der Kordeln mit den Stickfäden werden diese in die Fixierung miteinbezogen. Das Ansticken kann entlang eines Verstärkungsfadens oder in einem übergeordneten Muster über mehrere Fäden hinweg erfolgen.

An Stellen geringerer Belastungen oder großer Verformung der Verstärkungsfäden bei der Formgebung und in der späteren Form selbst ist es dagegen entsprechend einer anderen erfindungsgemäßen Ausgestaltung vorteilhaft, wenn die Verstärkungsfäden zumindest abschnittsweise partiell an die Trägerlage angestickt sind. Gleiches gilt für die Verbindung der Verstärkungsfäden untereinander. Dies kann je nach Art des Verstärkungsfadens durch kreuzweises Übersticken oder punktuelles Durchsteppen erfolgen. Eine kleinwinkelige Drehung der Verstärkungsfäden um die Anstickstelle wird ermöglicht. Sind parallel laufende Verstärkungsfäden gemäß einer weiteren Ausgestaltung der Erfindung durch übergreifendes kreuzweises Übersticken miteinander verbunden, wird insbesondere bei Verwendung von Hybrid-Verstärkungsfäden ein Wegschwimmen während der Verbundbildung vermieden. Durch eine derartige Verbindung sind die Verstärkungsfäden außerdem gegenseitig verschieb- und stauchbar. Fadenreserven können durch punktuelles Ansticken gebildet werden und somit Ausformungen am Formteil durch Dehnungen der Trägerlage berücksichtigt werden. Flächenüberdeckungen des Formteils, die in der Ebene nicht berücksichtigt werden können, werden mit Verstärkungsfäden dadurch versehen, daß Fadenreserven zwischen den Flächenrändern angelegt werden. Eine beliebige Variation zwischen kontinuierlichem und punktweisem Ansticken der Verstärkungsfäden zur beanspruchungsgerechten Anpassung ist problemlos möglich.

Auch die Stickfäden sind wählbar, sie müssen allerdings stark biegbar, dünn und glatt sein. Hybridfäden kommen wegen ihrer Stärke und Rauhheit nicht in Betracht, sie lassen sich nicht durch ein Nadelöhr fädeln. Die Stickfäden können wahlweise wie Wirkfäden keine Verstärkungsfunktionen ausüben und in den Verbund als Matrix beispielsweise aus Polyamid oder Polyester integriert sein, wobei jedoch zu beachten ist, daß die Glasübergangstemperatur (Erweichungstemperatur) der Stickfäden mindestens auf oder besser oberhalb der Erweichungstemperatur des Verbundmaterials liegt, um eine sicheren Fixierung der Verstärkungsfäden innerhalb des Verbundes bis zur fertigen Ausformung zu gewährleisten. Die Stickfäden können aber gemäß einer weiteren Ausgestaltung des erfinderischen Verstärkungsgebildes auch aus Verstärkungsfäden gebildet sein. Sie tragen dann in geringem Maße zur Gesamtfestigkeit bei und bestehen z. B. aus Glas, Polyamid, Polyester oder auch Baumwolle. Bei duroplastischen Polymeren ist die zusätzliche Verstärkung vorzuziehen, bei thermoplastischen Polymeren können die Stickfäden wahlweise in die Verstärkung oder in die Matrix miteinbezogen werden.

Im folgenden werden einige Ausführungsbeispiele des erfindungsgemäßen Verstärkungsgebildes anhand von Erläuterungen entsprechender Figuren beschrieben, um die gute Anpaßbarkeit des Verstärkungsgebildes an die räumlichen und kräftemäßigen Beanspruchungen geometrisch komplizierter Formteile und den hohen Produktivitätsstandard noch zu verdeutlichen. Dabei können die gewählten Beispiele nur einen kleinen Einblick in die breite Anwendungspalette des erfindungsgemäßen Verstärkungsgebildes, die bereits in der allgemeinen Beschreibung ausführlich behandelt wurde, geben.

Die Figuren sind schematisiert dargestellt. In die Darstellungen der Formteile sind die Verstärkungsfäden zum besseren Verständnis eingezeichnet. Je nach Herstellungsverfahren und verwendeten Materialien sind diese beim fertigen Formteil gegebenenfalls nicht mehr zu erkennen.

Es zeigt im einzelnen die
- Figur 1:: ein Kastenprofil mit einer Bohrung,
- Figur 2:: ein Verstärkungsgebilde für das Kastenprofil,
- Figur 3:: ein T-Profil mit einer Auskragung,
- Figur 4:: ein Verstärkungsgebilde für das T-Profil,
- Figur 5:: eine Bahnenanordnung der Trägerlage für das T-Profil,
- Figur 6:: ein Überschub-Formteil mit einer Aufnahmeöffnung,
- Figur 7:: ein Verstärkungsgebilde für das Überschub-Formteil,
- Figur 8:: einen Kasten mit sphärischer Erhebung,
- Figur 9:: ein Verstärkungsgebilde für den Kasten und
- Figur 10:: einen Ausschnitt aus einem Verstärkungsgebilde.

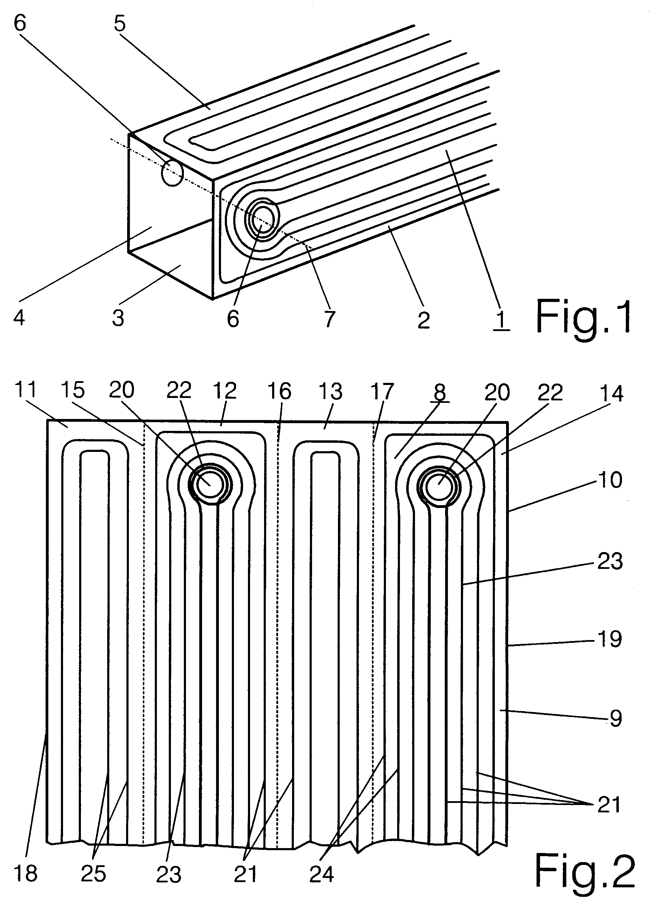

Die Figur 1 zeigt den vorderen Abschnitt eines im Querschnitt geschlossenen Kastenprofils 1, das im gewählten Beispiel aus duroplastischem Kunststoff besteht und mit einem Laminierungsverfahren hergestellt wird. Das Kastenprofil 1 ist aus vier rechtwinklig zueinander angeordneten Seitenwänden 2,3,4 und 5 aufgebaut. Die Seitenwände 2 und 4 tragen dabei jeweils eine Bohrung 6, die auf einer gemeinsamen Mittellinie 7 liegen und so das Hindurchstecken beispielsweise einer Achse (nicht dargestellt) ermöglichen.

In der Figur 2 ist ein Verstärkungsgebilde 8 für das Kastenprofil 1 (in Figur 2 nicht verwendete Bezugsziffern sind der Figur 1 zu entnehmen) dargestellt. Es besteht aus einer aus einem textilen Glaswerkstoff hergestellten Trägerlage 9, die in ihrer flächigen Abmessung 10 der Flächenabwicklung des Kastenprofils 1 entspricht. Die Flächenabwicklung setzt sich aus den Flächen 11,12,13,14 zusammen, deren Begrenzung zueinander in Figur 2 durch Strichelungen 25,16,17 angedeutet sind. Im fertigen Formteil bildet die Fläche 11 die Seitenwand 3, die Fläche 12 die Seitenwand 4, die Fläche 13 die Seitenwand 5 und die Fläche 14 die Seitenwand 2. Die Kanten des Kastenprofils 1 verlaufen entlang der Strichelungen 15,16,17. Seitenbegrenzungen 18 und 19 des Verstärkungsgebildes 8 bilden die Fügekante des Kastenprofils 1. Entsprechend der Zuordnung weisen die Flächen 12 und 14 kreisrunde Löcher 20 auf.

Auf der Trägerlage 9 sind Verstärkungsfäden 21 aus Glasfilamentgarn angeordnet. Sie sind durch Sticken befestigt; eine Darstellung der Stickfäden erfolgt in dieser Figur (und in einigen weiteren) der Übersichtlichkeit halber nicht. Alle Verstärkungsfäden 21 sind entlang von Kraftlinien orientiert, deren Verlauf für das Kastenprofil 1 beispielsweise computerunterstützt berechnet wurde. Zur Verstärkung der Löcher 20 sind diese jeweils von einem Verstärkungsfaden 22 in mehreren Umkreisungen derart umrandet, daß keine Verstärkungslücken und damit unter Belastung keine Rißbildungen entstehen ( 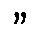 geschlossene" Umrandung). Diese Verstärkungsfäden 22 dienen in erster Linie dem Schutz der späteren Bohrung 6 gegenüber der eingeführten Achse und deren Kräften. Herstellungstechnisch werden zuerst die Fäden 22 verlegt und dann die Löcher 20 gebohrt. Um die Verstärkungsfäden 22 sind weitere Verstärkungsfäden 23 gelegt. Sie sind nicht mehr 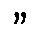 geschlossen" konturiert, sondern erstrecken sich mit einer Rückführung um die Bohrung 6 entlang des gesamten Verstärkungsgebildes 8, parallel zu den Seitenbegrenzungen 18 und 19 der Trägerlage 9. Die Verstärkungsfäden 23 dienen also sowohl der Verstärkung der Löcher 20, als auch der Aufnahme und Weiterleitung von Zugkräften, die im späteren Einsatzfall auf das Kastenprofil 1 entlang seiner Erstreckung einwirken können. Neben den weiteren Verstärkungsfäden 23 sind folgende Verstärkungsfäden 24 gelegt, die eine immer schwächer werdende Krümmung um die Löcher 20 herum aufweisen und alle parallel zu den Seitenbegrenzungen 18,19 verlaufen. Ihre Funktion ist dementsprechend zunehmend die Formteilverstärkung gegen Zugbelastungen. Die Flächen 11 und 13 weisen nunmehr rückgeführte Verstärkungsfäden 25 auf, die ausschließlich der Kraftentlastung dienen. Besonders deutlich wird bei ihrer Verlegung die Möglichkeit der Fadenrückführung beim Aufbringen der Verstärkungsfäden 21 auf der Trägerlage 9 durch Sticken. Im gewählten Ausführungsbeispiel (und auch in den meisten folgenden) sind die Verstärkungsfäden 21 nur durch Linien angedeutet, so daß über ihre Dimensionierung keine Information gegeben wird. Diese erfolgt beanspruchungsabhängig, z. B. sind die Verstärkungsfäden 22 etwas stärker gewählt als die übrigen, die alle dieselbe Stärke aufweisen.

Die Grundprinzipien der Flächenbemessung der Trägerlage und der beanspruchungsgerechten Fadenlegung sind nunmehr ausführlich behandelt worden. Die Legung der Verstärkungsfäden in den folgenden Beispielen wird deshalb, wenn nicht eine Besonderheit auftritt, nicht weiter erläutert. Gleiches gilt für den Zusammenhang zwischen dem geometrisch komplizierten Formteil und seiner Flächenabwicklung für die jeweilige Trägerlage.

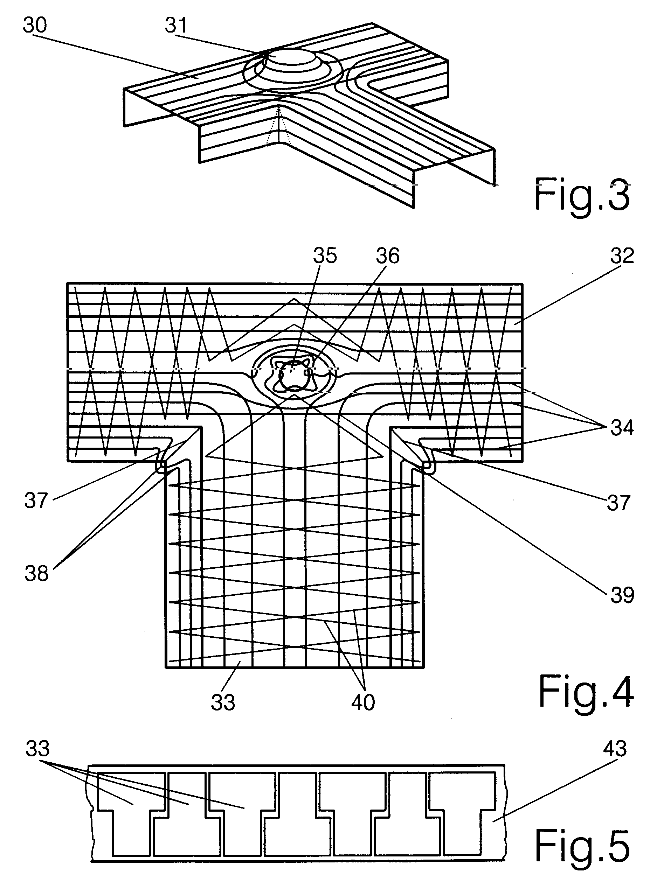

Die Figur 3 zeigt ein T-Profil 30 mit einer Auskragung 31. Es handelt sich um ein thermoplastisches Kunststoffteil, das durch Umformung hergestellt wird. In Figur 4 ist ein zugehöriges Verstärkungsgebilde 32 aus einer T-förmigen Trägerlage 33 und Verstärkungsfäden 34 dargestellt. Die Trägerlage 33 besteht aus einer dehnfähigen Polyesterfolie, so daß die Auskragung 31 durch Ausformen um eine (später herzustellende) Öffnung 35 herum hergestellt werden kann. Hierzu ist ein innerer Verstärkungsfaden 36 mit einer Fadenreserve sternförmig um die Öffnung 35 in mehreren Umkreisungen herumgelegt und partiell auf der Trägerlage 33 durch Ansticken fixiert. Zwischen den Anstickstellen bleibt der Verstärkungsfaden 36 beweglich. Die Auslaufstelle des Verstärkungsfaden 36 aus der Umkreisung der Öffnung 35 liegt der Einlaufstelle diametral gegenüber. Durch die sternförmige Umkreisung wird die Auskragung 31 in das T-Profil 30 kräftemäßig optimal eingebunden. Aufgrund der genannten Maßnahmen ist gewährleistet, daß der Verstärkungsfaden 36 beim fertig ausgekragten T-Profil 30 ringförmig um die Auskragung 31 angeordnet ist bzw. diametral darauf zuläuft (vgl. auch Figur 3) und so optimal der Verstärkung, der Einbindung und des Schutzes der Auskragung 31 und der Öffnung 35 dient.

Aus dem Zusammenhang zwischen der Raumform des T-Profils 30 und seiner Flächenabwicklung ergeben sich in der Trägerlage 33 Einschnitte 37. Die Fehlflächen (in Figur 3 gestrichelt angedeutet) werden beim Umformen durch Materialzugabe ausgeglichen. (Im dargestellten Beispiel wurden die Einschnitte 37 als ungünstigster Fall gewählt. Bei der Verwendung von dehnfähiger Folie als Trägerlage 33 können die Fehlflächen auch durch Tiefziehen der Folie ausgeglichen werden.) Um auch im Gebiet der Fehlflächen eine optimale Verstärkung zu erreichen, werden im Bereich der Einschnitte 37 für jeden dort verlaufenden Verstärkungsfaden 34 große Fadenreserven 38 schlaufenförmig zwischen zwei Anstickstellen angelegt. Durch diese Maßnahme ist eine 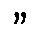 vorausschauende" Verstärkung möglich. Die Verstärkungsfäden 34 verlaufen kraftlinienorientiert. Durch den T-förmigen Abzweig entstehen deshalb auch Überkreuzungen 39 von Verstärkungsfäden 34, die problemlos aufgestickt werden können.
Die Verstärkungsfäden 34 sind im gewählten Beispiel Hybridfäden in Form von Verstärkungsfilamenten, denen thermoplastische Filamente innig beigemischt sind. Das thermoplastische Material schmilzt beim Umformungsvorgang unter Druck und Temperatur auf (möglich sind z. B. auch Hybridfäden mit Glasfaserseele und einer thermoplastischen Kunststoffmatrix). Um zu verhindern, daß beim Preßvorgang die Verstärkungsfilamente durch das Aufschmelzen der thermoplastischen Filamente weggeschwemmt werden, werden die Verstärkungsfäden 34 in Bereichen parallelen Verlaufs übergreifend kreuzweise im Steppstich überstickt und damit miteinander verbunden. Dies ist in der Figur 4 mit Stickverlauflinien 40 angedeutet. die Glasübergangstemperatur der Stickfäden muß ebenfalls zur Sicherung der Fixierung der Verstärkungsfäden 34 bis zum fertiggestellten T-Profil 30 oberhalb der von der Trägerlage 33 aus Polyesterfolie und des thermoplastischen Werkstoffes der Verstärkungsfäden 34 liegen.

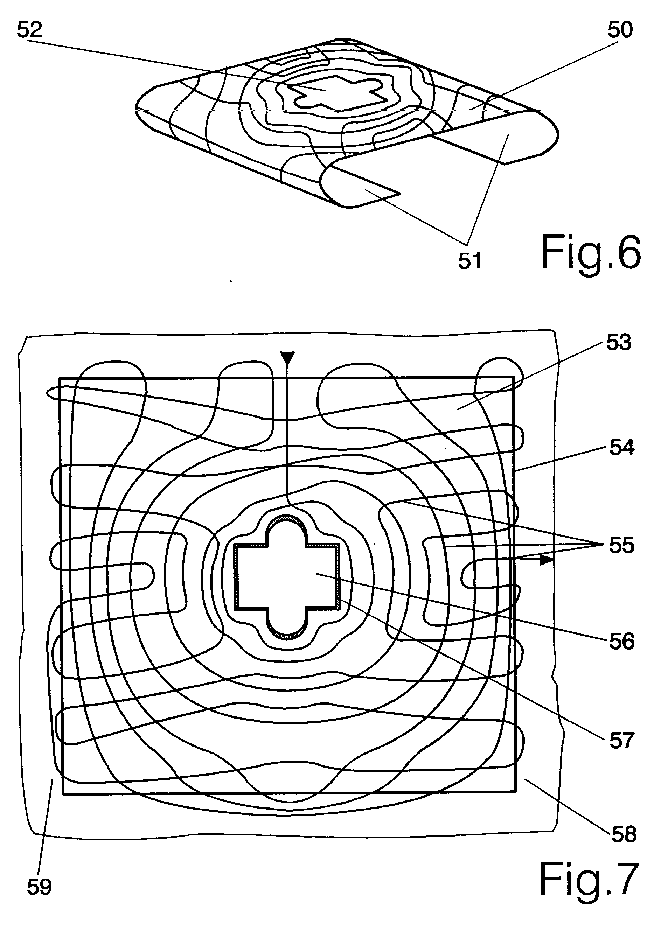

In der Figur 5 ist die Anordnung mehrerer Trägerlagen 33 auf einer Grundbahn 43 vor dem Besticken und Ausschneiden dargestellt. Dabei wird die Grundbahn 43 zu einer übergeordneten, bahnförmigen Trägerlage. Deutlich ist zu erkennen, daß durch das abwicklungsflächenentsprechende Ausschneiden nach dem Sticken und die dadurch möglich gewordene Anordnung der einzelnen Trägerlagen 33 eine besonders günstige Bahnenaufteilung und damit wenig Verschnitt gewährleistet sind. Das Ansticken von Verstärkungsfäden kann im vorliegenden Fall parallel mit mehreren Stickköpfen erfolgen. Die Grundbahn 43 wird dazu in einer Einspannvorrichtung gehalten, die mehrere Muster überdeckt und an den Seiten offen sein kann.

Die Figur 6 zeigt ein Überschubprofil 50, das durch umgebogene Seitenränder 51 gekennzeichnet ist. Es besteht aus einem Keramikverbundwerkstoff und wird durch Laminieren und Aushärten (Pyrolyseverfahren) hergestellt. Das Profil 50 weist in der Mitte eine Schlüssellochöffnung 52 auf, das zur Aufnahme eines entsprechend geformten weiteren Profils vorgesehen ist. Der zugehörigen Figur 7 ist ein Verstärkungsgebilde 53 zu entnehmen, das aus einer mit einer Randzugabe versehenen, quadratischen Trägerlage 54 und einem Verstärkungsfaden 55 aus Kunststoff besteht. Um die Öffnung 56 ist ein Verstärkungsfaden in Form einer starken Kordel 57 mit 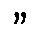 geschlossener" Kontur gelegt. Hierbei handelt es sich um ein zusammengebundenes Faserbündel. Die Kordel 57 folgt exakt der komplizierten Öffnungsform und verstärkt sie so optimal. Angedeutet ist in Figur 7, daß die Kordel 57 mit einem engen Stickstich sehr fest an die Trägerlage 54 fixiert ist. Dadurch wird auch ein direkter Anschluß von Fadenanfang und -ende ohne Schlaufenlegung ermöglicht. Der Verstärkungsfaden 55 folgt wiederum dem Kraftlinienverlauf, der sich nicht nur aus der Form des Bauteils selbst, sondern auch aus den an ihm angreifenden Kräften ergibt. Im gewählten Beispiel ist deutlich eine Verlegung des Verstärkungsfadens 55 in Form eines um die Öffnung 56 aufgebauten, zu den Seitenrändern 58,59 hin orientierten Kraftfeldes zu erkennen. Gut zu erkennen ist auch die den Anforderungen entsprechend frei wählbare Verlegung des Verstärkungsfadens 55. Weiterhin ist der Figur 7 zu entnehmen, daß die Verlegung des Verstärkungsfadens 55 in nur einem Kurvenzug erfolgt ist. Grundsätzlich wird stets die Minimierung der erforderlichen Kurvenzüge angestrebt. Fadenneuansätze sind relativ aufwendig. In Figur 7 ist auch andeutungsweise zu erkennen, daß die Umlenkungen des Verstärkungsfadens 55 außerhalb der eigentlichen Formteilkontur auf der Trägerlage 54 - aber noch innerhalb des Stickrahmens - liegen. Sie werden in einem nachfolgenden Arbeitsschritt zusammen mit dem überschüssigen Randzonenmaterial abgetrennt.

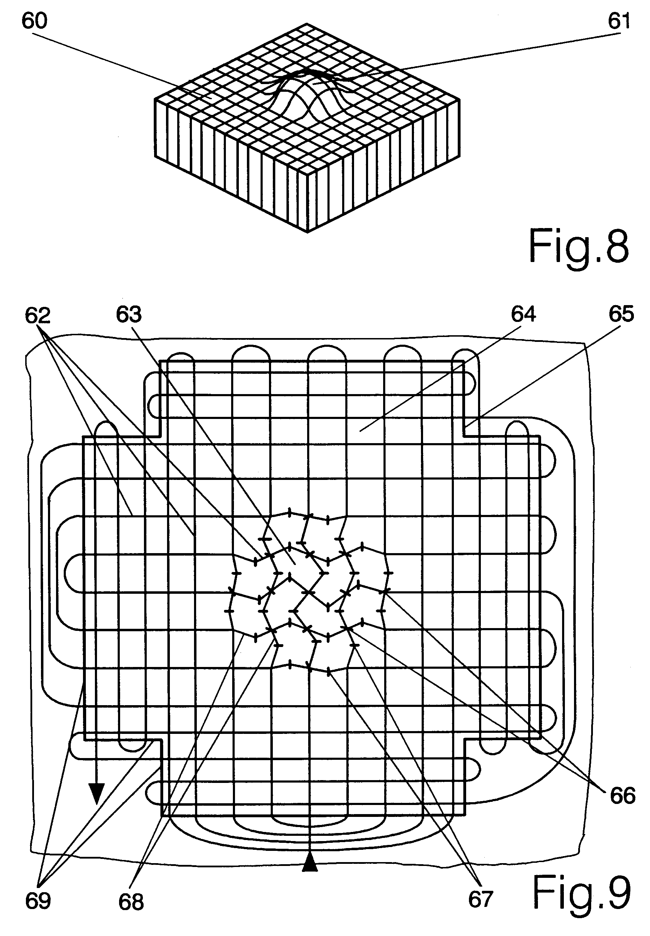

Die Figur 8 zeigt einen Kasten 60 aus einem Holzverbundwerkstoff mit einer sphärischen Erhebung 61. Wichtig ist hierbei die Verlegung eines Verstärkungsfadens 62 aus Kohlenstoff-Filamentgarn gemäß Figur 9 in einem Mittenbereich 63 einer mit Randzonenzugabe versehenen Trägerlage 64, aus der ein Verstärkungsgebilde 65 aufgebaut ist. Der Verstärkungsfaden 62 ist an Kreuzungspunkten 66 und an Scheitelpunkten 67 fest an die Trägerlage 64 angestickt und dazwischen mit kleinen Fadenreserven 68 verlegt. Die Trägerlage 64 besteht aus einer dehnbaren Folie, die bei der Herstellung nach dem Laminierverfahren über ein entsprechendes Modell elastisch geformt wird. Dabei spannt sich der Verstärkungsfaden 62 und kommt exakt auf den geodätischen Linien zu liegen. Das garantiert die optimale Verstärkung der sphärischen Erhebung 61.

Bei der vorgesehenen Belastung des Holzkastens 60 ist eine Fadenreserve in den Eckbereichen nicht erforderlich, die feste Verbindung wird in einem späteren Arbeitsgang beispielsweise durch Überlaschen hergestellt. Auch ist wiederum das Tiefziehen der Folie möglich. Der Verstärkungsfaden 62 ist über Ränder 69 hinausgestickt. Er wird erst nach der Laminierung abgetrennt, so daß es nicht zu einer Auflösung der Fäden kommt. Nur in den Eckbereichen ist ein Schneiden vor dem Laminieren erforderlich.

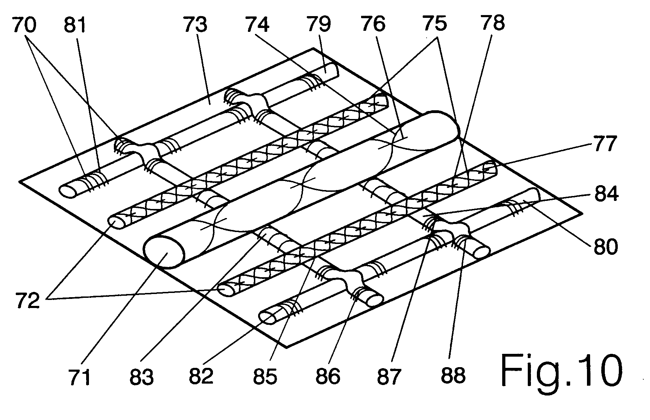

Die Figur 10 zeigt eine Ausschnittsvergrößerung von Anstickmöglichkeiten zwischen Trägerlage und Verstärkungsfäden mit Stickfäden 70. In Figur 10 sind als Verstärkungsfäden eine starke Kordel 71 und zwei dünne Kordeln 72 an einer Trägerlage 73, im Beispiel ein Gewebe, angesteppt. Die Kordel 71 ist mit einem Bindefaden 74 gebunden, die Kordeln 72 sind mit Flechtfäden 75 umflochten. Im Verlauf sind die Kordel 71 entsprechend ihrer Bindung und die Kordel 72 entsprechend ihrer Flechtung partiell an Stellen 76,77,78 folgende angesteppt. Parallel zu den Kordeln 71 und 72 verlaufen Verstärkungsfäden 79 und 80. Diese Verstärkungsfäden 79 und 80 sind zick-zack-artig zwischen Anstickstellen 81,82 folgende kontinuierlich überstickt. Über bzw. unter den Kordeln 71,72 und den Verstärkungsfäden 79,80 sind weitere Verstärkungsfäden 83,84 orthogonal verlaufend angeordnet. Diese weiteren Verstärkungsfäden 83,84 sind an Anstickstellen 85,86,87,88 folgende partiell an die Trägerlage 73 angestickt. Durch eine derartige geringe, aber sichere Fixierung ist die Trägerlage 73 für die Formgebung gut drapierbar, da die Kordeln 71,72 und Verstärkungsfäden 83,84 in einem bestimmten Maß innerhalb ihrer Verflechtung ineinander geschoben werden können. Das ist auch wichtig für Stauchungen der Trägerlage 73.

Alle beschriebenen Figuren zeigen Ausführungsbeispiele für das erfindungsgemäße Verstärkungsgebilde zur Armierung von Hochleistungsverbunden. Durch die große Variabilität in Form, Gestaltung und Material von Trägerlage und Verstärkungsfäden sowie durch die Zuordnung zwischen beiden durch das vielseitige Sticken handelt es sich bei der Erfindung um eine universell einsetzbare Verstärkungsmöglichkeit mit einem hohen Produktivitätsstandard.

## Patentansprüche

1. Formbares, multiaxiales Verstärkungsgebilde aus mindestens einer flächigen Trägerlage (9,33,54,64,73) und dieser zugeordneten Verstärkungsfäden (21...25,34,36,38,55,57,62,71,78...80,83,84) zur Armierung von Hochleistungsverbunden für die Herstellung geometrisch komplizierter Formteile (1,30,50,60) mit zumindest bereichsweise entsprechend den im Formteil (1,30,50,60) auftretenden Spannungen kraftlinienorientierten Legungen der Verstärkungsfäden (21...25,34,36,38,55,57,62,71,78...80,83,84), **dadurch gekennzeichnet, daß** die Trägerlage (9,33,54,64,73) in ihren Abmessungen der Flächenabwicklung des herzustellenden Formteils (1,30,50,60) entspricht, die Verstärkungsfäden (21...25,34,36,38,55,57,62,71,78...80,83,84) in ihrer Dimensionierung und Legung den Anforderungen entsprechend frei ausgewählt sind und die Trägerlage (9,33,54,64,73) und die Verstärkungsfäden (21...25,34,36,38,55,57,62,71,78...80,83,84) durch Sticken mittels Stickfäden (70) einander zugeordnet sind.

2. Verstärkungsgebilde nach Anspruch 1, **dadurch gekennzeichnet, daß** die Trägerlage (9,73) aus einem textilen Glaswerkstoff besteht.

3. Verstärkungsgebilde nach Anspruch 1, **dadurch gekennzeichnet, daß** die Trägerlage (33,54,64) aus einem folienartigen Kunststoff besteht.

4. Verstärkungsgebilde nach einem der Ansprüche 1 bis 3, **dadurch gekennzeichnet, daß** die Verstärkungsfäden (21...25,55,62,71,72,79,80,83,84) aus Filamentgarn bestehen.

5. Verstärkungsgebilde nach einem der Ansprüche 1 bis 3, **dadurch gekennzeichnet, daß** die Verstärkungsfäden (34,36,38) aus einem Hybridgarn bestehen, das aus verstärkungs- und verbundbildenden Filamenten aufgebaut ist.

6. Verstärkungsgebilde nach Anspruch 4 und 5, **dadurch gekennzeichnet, daß** die Verstärkungsfäden als Kordeln (57,71,72) ausgebildet sind.

7. Verstärkungsgebilde nach Anspruch 6, **dadurch gekennzeichnet, daß** die Kordeln (57,71,72) mit mindestens einem Binde- bzw. Flechtfaden (74,75) zusammengehaltene Filamentgarnstränge sind.

8. Verstärkungsgebilde nach einem der Ansprüche 1 bis 7, **dadurch gekennzeichnet, daß** die Verstärkungsfäden (71,72,83,84) mit den Stickfäden (70) zumindest abschnittsweise kontinuierlich (81,82) an die Trägerlage (73) angestickt sind.

9. Verstärkungsgebilde nach einem der Ansprüche 1 bis 8, **dadurch gekennzeichnet, daß** die Verstärkungsfäden (79,80,83,84) mit den Stickfäden (70) zumindest abschnittsweise partiell (76...78,85...88) an die Trägerlage (73) angestickt sind.

10. Verstärkungsgebilde nach den Ansprüchen 5 und 9, **dadurch gekennzeichnet, daß** parallel verlaufende Verstärkungsfäden (34,36,38) durch übergreifendes kreuzweises Übersticken (40) miteinander verbunden sind.

11. Verstärkungsgebilde nach einem der Ansprüche 1 bis 10, **dadurch gekennzeichnet, daß** die Stickfäden (70) auch aus Verstärkungsfäden gebildet sind.

12. Verstärkungsgebilde nach einem der Ansprüche 1 bis 11, **dadurch gekennzeichnet, daß** zur Bildung eines über die Ebene hinausgehenden Gebildes (31,61) der Trägerlage (33,64) und/oder der Verstärkungsfäden (34,62) bewegliche Fadenreserven (38,68) der Verstärkungsfäden (34,62) vorhanden sind.

## Claims

1. Deformable, multiaxial reinforcing structure consisting of at least one sheet-like supporting layer (9, 33, 54, 64, 73) and, assigned to the latter, reinforcing threads (21...25, 34, 36, 38, 55, 57, 62, 71, 78...80, 83, 84) for the reinforcement of high-duty laminates for the manufacture of geometrically complicated mouldings (1, 30, 50, 60) with layings of the reinforcing threads (21...25, 34, 36, 38, 55, 57, 62, 71, 78...80, 83, 84), wherein said layings are oriented with lines of force at least in certain sections according to the stresses occurring in the moulding (1, 30, 50, 60), **characterised in that** the supporting layer (9, 33, 54, 64, 73) corresponds in its dimensions to the planar development of the moulding (1, 30, 50, 60) to be manufactured, the reinforcing threads (21...25, 34, 36, 38, 55, 57, 62, 71, 78...80, 83, 84) are freely selected in their dimensioning and laying in accordance with the requirements, and the supporting layer (9, 33, 54, 64, 73) and the reinforcing threads (21...25, 34, 36, 38, 55, 57, 62, 71, 78...80, 83, 84) are assigned to one another by embroidering by means of embroidery threads (70).

2. Reinforcing structure according to claim 1, **characterised in that** the supporting layer (9, 73) consists of a woven glass material.

3. Reinforcing structure according to claim 1, **characterised in that** supporting layer (33, 54, 64) consists of a film-type plastic.

4. Reinforcing structure according to one of claims 1 to 3, **characterised in that** the reinforcing threads (21...25, 55, 62, 71, 72, 79, 80, 83, 84) consist of filament yarn.

5. Reinforcing structure according to one of claims 1 to 3, **characterised in that** the reinforcing threads (34, 36, 38) consist of a hybrid yarn which is composed of reinforcing and laminate-forming filaments.

6. Reinforcing structure according to claims 4 and 5, **characterised in that** the reinforcing threads are constructed as strings (57, 71, 72).

7. Reinforcing structure according to claim 6, **characterised in that** the strings (57, 71, 72) are strands of filament yarn held together by at least one binding or braiding thread (74, 75).

8. Reinforcing structure according to one of claims 1 to 7, **characterised in that** the reinforcing threads (71, 72, 83, 84) are embroidered to the supporting layer (73) with the embroidery threads (70) continuously (81, 82) at least in certain sections.

9. Reinforcing structure according to one of claims 1 to 8, **characterised in that** the reinforcing threads (79, 80, 83, 84) are embroidered to the supporting layer (73) with the embroidery threads (70) partially (76...78, 85...88) at least in certain sections.

10. Reinforcing structure according to claims 5 and 9, **characterised in that** parallel running reinforcing threads (34, 36, 38) are connected to one another by overlapping crosswise over-embroidering (40).

11. Reinforcing structure according to one of claims 1 to 10, **characterised in that** the embroidery threads (70) are also formed as reinforcing threads.

12. Reinforcing structure according to one of claims 1 to 11, **characterised in that**, in order to form a structure (31, 61) of the supporting layer (33, 64) and/or of the reinforcing threads (34, 62) which extends over the plane, movable thread reserves (38, 68) of the reinforcing threads (34, 62) are provided.

## Revendications

1. Structure de renforcement, multiaxiale, susceptible d'être mise en forme, composée d'au moins une couche de support constituée par une surface (9, 33, 54, 64, 73) et des fils de renforcement (21 ... 25, 34, 36, 38, 55, 57, 62, 71, 78 ... 80, 83, 84) associés à celle-ci pour armer des produits composites très résistants, servant à la fabrication de pièces moulées (1, 30, 50, 60), à forme géométrique compliquée, avec au moins par zones des dispositions de fils de renforcement (21 ... 25, 34, 36, 38, 55, 57, 62, 71, 78 ... 80, 83, 84), orientées suivant les lignes de force, correspondant aux tensions produites dans la pièce moulée (1, 30, 50, 60),
caractérisée en ce que
la couche de support (9, 33, 54, 64, 73) correspond par ses dimensions au développement en surface de la pièce moulée (1, 30, 50, 60) à réaliser, les fils de renforcement (21 ... 25, 34, 36, 38, 55, 57, 62, 71, 78 ... 80, 83, 84) étant choisis librement dans leur dimensionnement et leur disposition en fonction des exigences et la couche de support (9, 33, 54, 64, 73) et les fils de renforcement (21 ... 25, 34, 36, 38, 55, 57, 62, 71, 78 ... 80, 83, 84) étant associés par des broderies réalisées avec des fils de broderie (70).

2. Structure de renforcement selon la revendication 1,
caractérisée en ce que
la couche de support (9, 73) est formée d'une matière textile comprenant des fils de verre.

3. Structure de renforcement selon la revendication 1,
caractérisée en ce que
la couche de support (33, 54, 64) est constituée par une matière plastique en forme de feuille.

4. Structure de renforcement selon l'une des revendications 1 à 3,
caractérisée en ce que
les fils de renforcement (21 ... 25, 34, 36, 38, 55, 57, 62, 71, 78 ... 80, 83, 84) sont des fils formés de filaments.

5. Structure de renforcement selon l'une des revendications 1 à 3,
caractérisée en ce que
les fils de renforcement (34, 36, 38) sont constituée par un fil hybride avec des filaments de renforcement et des filaments de liaison.

6. Structure de renforcement selon les revendications 4 et 5,
caractérisée en ce que
les fils de renforcement sont des cordons (57, 71, 72).

7. Structure de renforcement selon la revendication 6,
caractérisée en ce que
les cordons (57, 71, 72) sont des brins de fils à filaments maintenus réunis par un fil de liaison ou un fil de tressage (74, 75).

8. Structure de renforcement selon l'une des revendications 1 à 7,
caractérisée en ce que
les fils de renforcement (71, 72, 83, 84) sont cousus avec des fils de broderie (70), au moins par segment, de façon continue (81, 82) sur la couche de support (73).

9. Structure de renforcement selon l'une des revendications 1 à 8,
caractérisée en ce que
les fils de renforcement (79, 80, 83, 84) sont cousins avec les fils de broderie (70) au moins par segment, de façon partielle (76 ... 78, 85 ... 88) à la couche de support (73).

10. Structure de renforcement selon les revendications 5 et 9,
caractérisée en ce que
des fils de renforcement (34, 36, 38) dirigés de manière parallèle, sont reliés par des broderies en croix (40) qui passent par-dessus les fils.

11. Structure de renforcement selon l'une des revendications 1 à 10,
caractérisée en ce que
les fils de broderie (70) sont constitués par des fils de renforcement.

12. Structure de renforcement selon l'une des revendications 1 à 11,
caractérisée en ce que
pour former une structure (31, 61) de la couche de support (33, 64) qui passe au-delà du plan et/ou des fils de renforcement (34, 62), il y a des réserves de fil (38, 68) mobiles des fils de renforcement (34, 62).
